# EUROPEAN PATENT SPECIFICATION

(11) **EP 1 392 016 B1**
(45) Date of publication and mention of the grant of the patent: **21.12.2011**
(21) Application number: 03017678.8
(22) Date of filing: 14.08.2003
(51) Int. Cl.: H04B 10/158, H04J 14/08

(54) **Separating apparatus for optical time division multiplexed signal**
Vorrichtung zum Abtrennen für ein optisches Zeitmultiplexsignals
Dispositif de séparation pour signal optique multiplexé temporellement

(30) Priority: 20.08.2002 JP 2002238806
(43) Date of publication of application: 25.02.2004
(73) Proprietor: FUJITSU LIMITED, Kawasaki-shi, Kanagawa 211-8588 (JP)
(72) Inventor: Futami, Fumio, Kawasaki-shi Kanagawa 211-8588 (JP); Watanabe, Shigeki, Kawasaki-shi Kanagawa 211-8588 (JP)
(74) Representative: HOFFMANN EITLE

(56) References cited:
- MASAHIKO JINNO: "49.6 GB/S ELECTROOPTIC DEMULTIPLEXING USING CASCADED ON/OFF GATES" IEEE PHOTONICS TECHNOLOGY LETTERS, IEEE SERVICE CENTER, PISCATAWAY, NJ, US, vol. 4, no. 6, 1 June 1992 (1992-06-01), pages 641-644, XP000275553 ISSN: 1041-1135
- MIKKELSEN B ET AL: "320-GB/S SINGLE-CHANNEL PSEUDOLINEAR TRANSMISSION OVER 200 KM OF NONZERO-DISPERSION FIBER" IEEE PHOTONICS TECHNOLOGY LETTERS, IEEE SERVICE CENTER, PISCATAWAY, NJ, US, vol. 12, no. 10, October 2000 (2000-10), pages 1400-1402, XP000970146 ISSN: 1041-1135

## Description

### (1) Field of the Invention

The present invention relates to a separating apparatus for time division separating desired signal light from time division multiplexed signal light, and an optical receiving apparatus and an optical transmission system using the same. More specifically, the present invention relates to a technique for performing extraction of a clock synchronous with signal light, or for time division separating desired signal light, using an optical gate having a two-stage configuration connected serially.

### (2) Description of the Related Art

A modulation rate of signals used in optical fiber communication systems continues to increase year after year, and utilization of a signal rate of 100Gb/s or higher being well over an electric band, in which RZ signal light of about 10Gb/s is multiplexed by an optical time division multiplexing technique is now being studied in earnest. In the optical communication system using these ultrahigh-speed signals, at the time of receiving the signal light, the signal light multiplexed on a time axis must be separated on the time axis. A time switch operating stably at a high speed is required for this purpose. This switch may be configured to be turned ON to transmit light only for a time when the signal light intended to be separated passes therethrough, and to be turned OFF at other times to cut off the signal light. For example, a switch having a gate time of about a picosecond is required for time division separating signal light of 10Gb/s from signals of 100Gb/s. A switch having a shorter gate time is essential for performing separation from higher speed signal light.

As a separation method for time division multiplexed signal light, for example, typically, signal light is converted into electric signals at an optical receiving device, and only a desired signal is electrically separated using a switch. This method has a feature in that it operates very stably. However, in this method, since the separation processing is controlled at an electronic circuit, a response time is restricted by an operation speed of a transistor or the like. Therefore, it becomes difficult to operate a separating apparatus using the electric method at a speed higher than 40Gb/s.

As a method for optically performing all the separation processing of time division multiplexed signal light, there is known a method of utilizing a non-linear effect, such as four wave mixing (FWM) or cross phase modulation (XPM), which occurs depending on the intensity of light, in a non-linear medium such as an optical fiber or a semiconductor optical amplifier (SOA). This method has a feature in that a response time becomes an order of from picosecond to sub-picosecond, thereby enabling a high-speed operation.

Specifically, the method using the FWM in the SOA is reported in, for example, document (1): IEE Electronics Letters, vol. 30, issue: 12, 9 June 1994, pp. 981-982. According to the method described in document (1), an optical clock of 6.3GHz is prepared separately, to optically separate time division multiplexed signal light of 100Gb/s, and thereafter, the optical clock is removed by an optical filter. In this method, in document (2): IEE Electronics Letters, vol. 32, issue: 9, 25 April 1996, pp. 840-842, a maximum speed of 200Gb/s has been achieved.

The method using the XPM in an optical fiber is reported in, document (3): IEE Electronics Letters, vol. 26, issue: 14, 5 July 1990, pp. 962-964. According to the method described in document (3), an optical clock (pulse width: picosecond, repetition frequency: 10GHz) generated from a fiber ring laser driven by an electric clock extracted from time division multiplexed signal light is prepared, and a logical product of signal light and the optical clock synchronous with the signal light is obtained in a non-linear loop mirror (NOLM) formed of optical fibers. The XPM generated in the NOLM is converted into intensity modulation by a coupler, to output only the signal light to be separated to an output port, and the remaining signal light is reflected to an incident port. For the optical fibers or the like in the NOLM, the group velocity dispersion is precisely controlled. In document (4): IEE Electronics Letters, vol. 34, issue: 10, 14 May 1998, pp. 1013-1014, this method has succeeded in separating time division multiplexed signal light of 640Gb/s.

Each of the above two methods has a feature in that a high speed operation is possible, but since a short-pulse light source generating the optical clock synchronous with the signal light, and an optical filter sorting the time division separated signal lights and the optical clock are required, there are disadvantages in that an apparatus configuration becomes complicated, leading a high manufacturing cost of the apparatus. Specifically, with regard to the short-pulse light source, when an optical signal having a bit rate of B b/s is time division multiplexed at N (N: positive integer) multiplexing degrees, the bit rate of the time division multiplexed signal light becomes N × B b/s. Hence, it is required that an optical clock having a pulse width narrower than (N × B)⁻¹ second can be generated at a frequency of B Hz synchronous with this signal light. For example, when the bit rate of the time division multiplexed signal light is 100Gb/s, an optical clock having a pulse width narrower than 10ps is required. However, it is generally difficult to manufacture the short-pulse light source that stably generates the optical clock having such a narrow pulse.

As another method in which the short-pulse light source and the optical filter as described above are not required, in document (5): ECOC '99, 1999, Postdeadline Paper, pp. 28-30 and the like, there is reported a technique for serially connecting optical modulators each using an electric field absorbing effect where an optical-absorption coefficient is changed due to an applied field, to perform separation of time division multiplexed signal light.

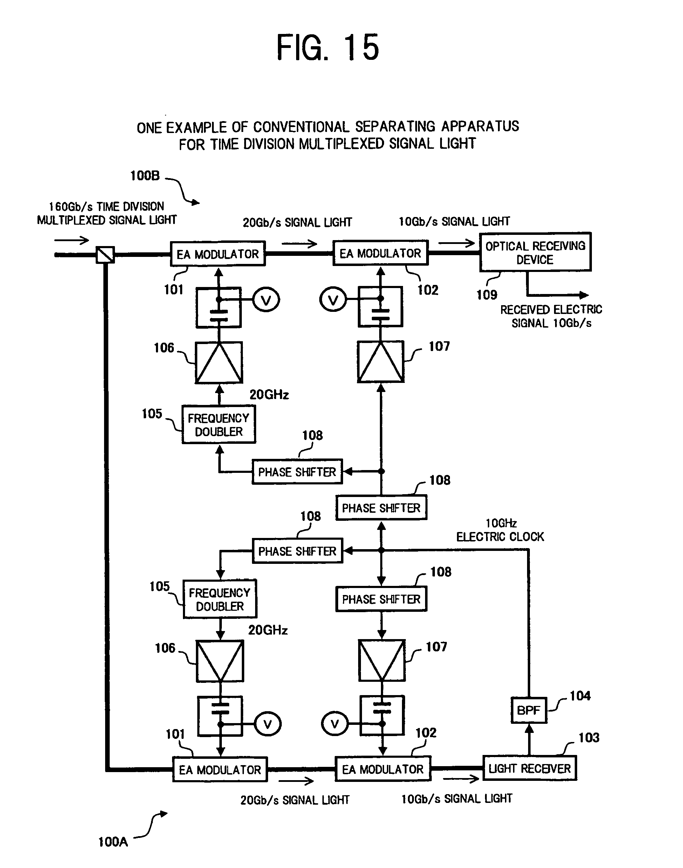

FIG. 15 shows a configuration of the separating apparatus for time division multiplexed signal light described in document (5). In this separating apparatus, time division multiplexed signal light is branched into two, and one branched light is supplied to a unit 100A on a clock extraction side, and the other branched light is supplied to a unit 100B on a time division separation side of the signal light. The respective units 100A and 100B on the clock extraction side and the signal light separation side are in common in the point of separating the time division multiplexed signal light of 160Gb/s into 10Gb/s signal light, and in each of the units 100A and 100B, two optical gates 101 and 102 each using the electro-absorption type optical modulator (EA modulator) are serially connected.

The optical gate 101 on the previous stage operates as an optical switch, by driving the EA modulator by an electric clock having a repetition frequency of 20GHz synchronous with the signal light. The 20GHz electric clock is a clock signal generated by converting, based on an electric signal having a fundamental frequency of 10GHz fed back from a light receiver 103 on the clock extraction side described later via an electric band-pass filter (BPF) 104, the frequency of the electric signal into 20GHz, two times of 10GHz, by a frequency doubler 105, and amplifying the 20GHz component to a required level by an electric amplifier 106. The optical gate 102 on the subsequent stage operates as an optical switch, by driving the EA modulator by an electric clock having a repetition frequency of 10GHz synchronous with the signal light. This electric clock of 10GHz is a clock signal generated by amplifying the electric signal having the fundamental frequency fed back from the light receiver 103 to a required level by an electric amplifier 107.

In the above separating apparatus, in the respective units 100A and 100B, the 160Gb/s time division multiplexed signal light passes through the optical gate 101 on the previous stage and is time division separated into 20Gb/s signal light, and subsequently, passes through the optical gate 102 on the subsequent stage and is time division separated into 10Gb/s signal light. In the unit 100A on the clock extraction side, after the signal separated into 10Gb/s is converted into an electric signal at the light receiver 103, the 10GHz component is extracted at the BPF 104. A phase of the extracted electric signal is appropriately adjusted by a plurality of phase shifters 108, and the electric signal is fed back to the two optical gates 101 and 102 in the respective units 100A and 100B. On the other hand, in the unit 100B on the signal light separation side, the time division separated signal light is guided to a 10Gb/s optical receiving device 109 and subjected to required reception processing.

With regard to the method using the EA modulator of two-stage configuration as described above, there has also been reported a technique in document (6): IEEE Photonics letters, vol. 12, no. 10, pp. 1400-1402, in which 320Gb/s time division multiplexed signal light that has been alternatively polarization multiplexed is polarization-separated to become equivalent to 160Gb/s, and thereafter, is time division separated by two serially connected EA modulators.

However, with the conventional method of separating the time division multiplexed signal light by the EA modulators of two-stage configuration as shown in FIG. 15, in the optical gate 101 on the previous stage, the 20GHz electric clock obtained by multiplying the 10GHz fundamental frequency by 2 is used as a drive signal in order to reduce an optical gating time. However, in order to realize the 20GHz electric clock, the frequency doubler 105 and the electric amplifiers 106 for 20GHz are required, and hence there are problems in that the apparatus configuration becomes complicated, and the cost increases.

A further document (7): Mashiko Jinno "49.6 Gb/s Electrooptic Demultiplexing using cascaded ON/OFF Gates", IEEE Photonics Technology Letters, IEEE Service Center, Piscataway, NJ, US, vol. 4, no. 6, 1 June 1992 (1992-06-01), pages 641-644, XP 000275553 ISSN: 1041-1135, describes a configuration of cascaded modulators for demultiplexing signal light each of which is driven with a AC voltage having different frequencies depending on the stage of the modulator. Further, document (7) describes a configuration of two serial modulators which are driven with an AC voltage having an identical frequency and amplitude for each stage in order demultiplex signal light.

### SUMMARY OF THE INVENTION

The present invention has been accomplished in view of the above points, and has an object to provide a separating apparatus with a simple configuration, capable of time division separating time division multiplexed signal light directly and stably, and also to provide an optical receiving apparatus and an optical transmission system using this separating apparatus.

This object of the invention is solved by the subject matter of the independent claims. Further advantageous features are disclosed in the dependent claims.

In an embodiment there is provided a separating apparatus for time division multiplexed signal light, which is input with time division multiplexed signal light obtained by multiplexing a plurality of signal light on a time axis, and guides the time division multiplexed signal light, respectively, to a first optical gate section in which the transmittance thereof is periodically changed in accordance with a repetition frequency of "n" times a bit rate of the signal light (n is a positive integer excluding 1), and to a second optical gate section connected in series to the first optical gate section, in which the transmittance thereof is periodically changed in accordance with a repetition frequency equal to the bit rate of the signal light, to separate at least one signal light included in the time division multiplexed signal light on the time axis, wherein the first optical gate section comprises; a first optical modulator in which an optical transmission characteristic thereof with respect to a drive voltage is periodically changed, and a first drive circuit that supplies to the first optical modulator a drive signal having a repetition frequency equal to the bit rate of the signal light, and having the voltage magnitude corresponding to a voltage difference in an n/2 period in the periodic optical transmission characteristic of the first optical modulator.

In the separating apparatus having such a configuration, the first optical modulator is driven, in accordance with the drive signal having the repetition frequency equal to the bit rate of the signal light, and having the voltage magnitude corresponding to the voltage difference in the n/2 period in the periodic optical transmission characteristic of the first optical modulator. As a result, the first optical gate section functions as an optical switch that operates in accordance with the repetition frequency "n" times the bit rate of the signal light. Hence, the first optical gate section can be driven without requiring multiplication of a clock having a repetition frequency the same as the bit rate of the signal light. As a result, the configuration of the separating apparatus can be simplified, and the cost can be reduced.

As a specific configuration of the separating apparatus, a Mach-Zehnder optical modulator can be used for the first optical modulator. Moreover, the first drive circuit may generate a drive signal to be supplied to the first optical modulator, by adjusting a phase and voltage magnitude of an electric clock having a repetition frequency equal to a bit rate of the signal light extracted based on the signal light having passed through the first and second optical gate sections.

Further, according to the present invention, there is provided an optical receiving apparatus, which is input with time division multiplexed signal light obtained by multiplexing a plurality of signal light on a time axis, and comprises: a clock extracting unit extracting a clock having a repetition frequency equal to a bit rate of the signal light, based on the time division multiplexed signal light; and a signal light receiving unit separating the respective signal light included in the time division multiplexed signal light on the time axis to perform reception processing, wherein at least one of the clock extracting unit and the signal light receiving unit includes the separating apparatus for time division multiplexed signal light according to the present invention described above.

In the optical receiving apparatus having such a configuration, extraction of the clock from the time division multiplexed signal light, or time division separation of the respective signal light, or both of the extraction and the time division separation are performed, using the separating apparatus for time division multiplexed signal light as described above. As a result, an optical receiving apparatus of a simple configuration and low cost can be realized.

The separating apparatus of the time division multiplexed signal light and the optical receiving apparatus using the separating apparatus are useful for constructing an ultrahigh-speed optical transmission system that time division multiplexes a plurality of signal light to transmit time division multiplexed signal light. Specific aspects of such an optical transmission system will be described in detail in the following embodiment.

Other objects, features and advantages of the present invention will become apparent from the following description of embodiments in conjunction with the appended drawings.

### BRIEF DESCRIPTION OF THE DRAWINGS

FIG. 1 is a block diagram showing a configuration of one embodiment of a separating apparatus for time division multiplexed signal light according to the present invention.
FIG. 2 shows an optical transmission characteristic of an MZ optical modulator used as an optical gate in the embodiment.
FIG. 3 shows an optical transmission characteristic of an EA modulator used as an optical gate in the embodiment.
FIG. 4 shows one example of optical gate property of when the MZ optical modulator is driven with the voltage magnitude of Vπ in the embodiment.
FIG. 5 shows one example of optical gate property of when the MZ optical modulator is driven with the voltage magnitude of 2×Vπ in the embodiment.
FIG. 6 is a diagram for explaining an operation of when #1 signal light is time division separated in the embodiment.
FIG. 7 shows examples of arrangements of phase shifters each adjusting a phase of a drive signal in the embodiment.
FIG. 8 shows one example of when the MZ optical modulator is operated at a repetition frequency three times a bit rate of the signal light, related to the embodiment.
FIG. 9 shows one example of when the #1 signal light is time division separated, for the case shown in FIG. 8.
FIG. 10 is a block diagram showing a schematic configuration of one embodiment of an optical receiving apparatus according to the present invention.
FIG. 11 is a block diagram showing a schematic configuration of another embodiment of the optical receiving apparatus according to the present invention.
FIG. 12 is a block diagram showing a schematic configuration of a further embodiment of the optical receiving apparatus according to the present invention.
FIG. 13 is a block diagram showing a schematic configuration of one embodiment of an optical transmission system according to the present invention.
FIG. 14 is a block diagram showing a schematic configuration of another embodiment of the optical transmission system according to the present invention.
FIG. 15 is a block diagram showing a schematic configuration of a conventional separating apparatus for time division multiplexed signal light.

### DETAILED DESCRIPTION OF THE INVENTION

Hereunder is a description of embodiments of the present invention based on the drawings.

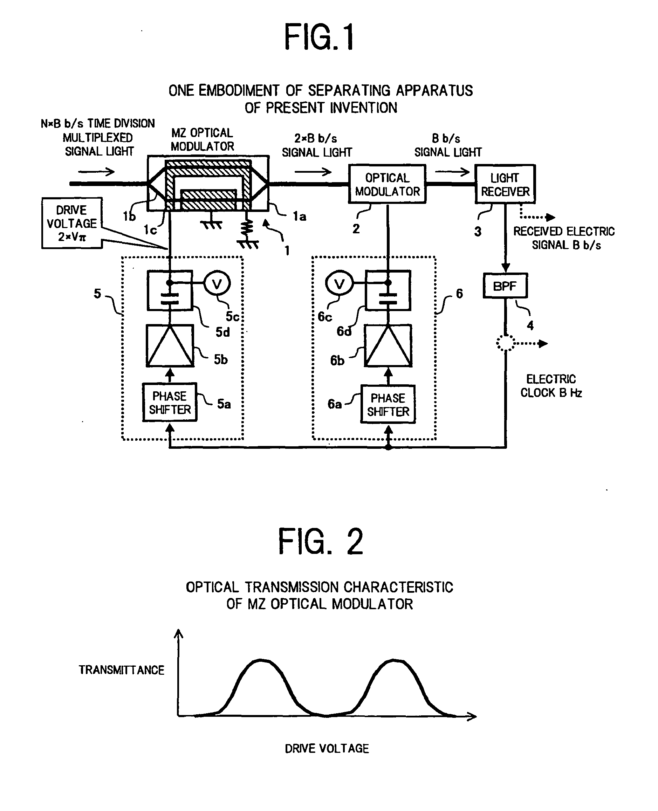

FIG. 1 is a block diagram showing a configuration of one embodiment of a separating apparatus for time division multiplexed signal light according to the present invention.

In FIG. 1, the separating apparatus comprises for example: a Mach-Zehnder modulator (hereunder, referred to as an MZ modulator) 1 as a first optical gate section which is input with N × B b/s time division multiplexed signal light obtained by time division multiplexing B b/s signal light at N multiplexing degrees; an optical modulator 2 as a second optical gate which is input with the signal light having passed through the MZ optical modulator 1 and then has been time division separated; a light receiver 3 which is input with the signal light having passed through the optical modulator 2 and then has been time division separated; a band-pass filter (BPF) 4 which is input with an electric signal photoelectrically converted at the light receiver 3; a drive circuit 5 driving the MZ optical modulator 1; and a drive circuit 6 driving the optical modulator 2. The present separating apparatus is, as shown by the broken line in FIG. 1, used as a unit for extracting a B Hz electric clock from the N × B b/s time division multiplexed signal light, or as a unit for time division separating a desired B b/s signal light from the N × B b/s time division multiplexed signal light to generate a received electric signal.

The MZ optical modulator 1 is a well-known optical modulator utilizing a Mach-Zehnder interferometer, in which light input to an optical waveguide 1 b formed on a substrate 1a is branched into two, and when being propagated through branched waveguides, respective branched lights undergo different phase changes due to an electro-optic effect generated corresponding to a drive voltage applied to an electrode 1c, and then are multiplexed and interfered to be output. This MZ optical modulator 1 has, for example as shown in FIG. 2, a property in that an optical transmission characteristic with respect to the drive voltage is changed periodically. In this embodiment, paying attention to the periodic optical transmission characteristic of the MZ optical modulator 1, the magnitude of the drive voltage applied to the MZ optical modulator 1 is adjusted to 2 × Vπ as described below, so that the 2 × B b/s signal light can be time division separated without multiplying by 2 a repetition frequency B Hz of an electric clock fed back from the light receiver 3 via the BPF 4.

For the substrate 1a of the MZ optical modulator 1, a known substrate material having the electro-optic effect, for example, lithium niobate (LiNbO₃) or the like can be used. Moreover, if for example indium phosphorus (lnP) or the like is used as the material for the substrate 1a, a polarization independent MZ optical modulator can be realized. Such a polarization independent MZ optical modulator is suitable for the MZ optical modulator 1 in the present separating apparatus, which is mainly applied to a reception side to receive signal light whose polarization condition is changed. The polarization independent MZ optical modulator made of indium phosphorus as described above is well known in document (7): IEE Electronics Letters, vol. 35, pp. 730-731, 1999.

In FIG. 1, the example in which the drive voltage corresponding to the electric clock is applied to the electrode along one of the branched waveguides, and the electrode along the other branched waveguide is grounded, has been shown as a configuration of the MZ optical modulator 1. However, the configuration of the MZ optical modulator 1 used in the present invention is not limited thereto, and for example, it is possible to apply various known configurations such that drive voltages having phases differing from each other by about 180° are applied to the respective electrodes along the respective branched waveguides.

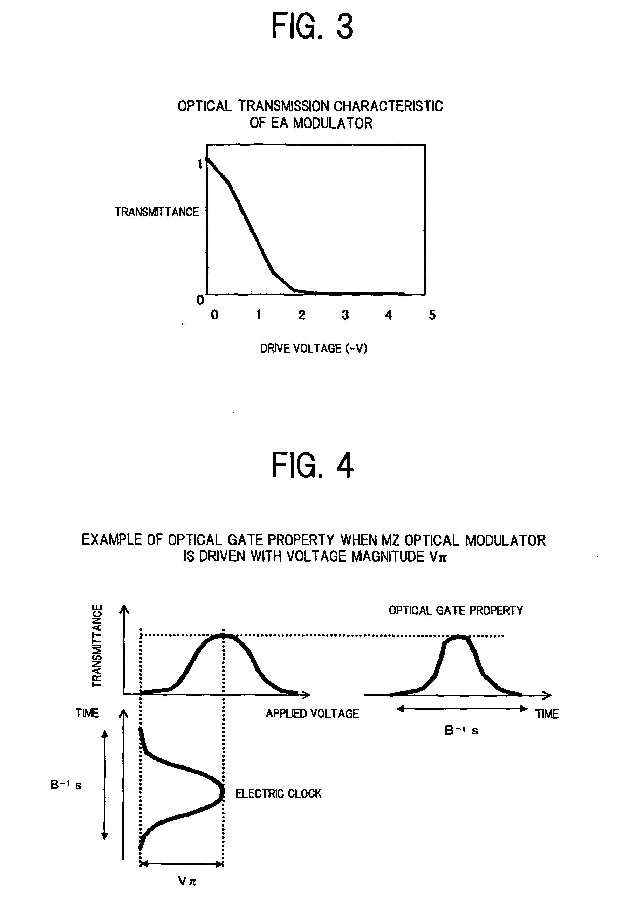

The optical modulator 2 is for realizing a similar function to that of the second optical gate 102 in the conventional configuration shown in FIG. 15, and is an optical device capable of being driven by the drive circuit 6 based on the B Hz electric clock fed back from the light receiver 3 via the BPF 4, to time division separate the B b/s signal light from the 2 × B b/s signal light having passed through the MZ optical modulator 1. As the optical modulator 2, there can be used an EA modulator having a property, as shown in FIG. 3 for example, in that an optical-absorption coefficient is increased and the transmittance is continuously decreased, with a decrease in the drive voltage. It is also possible to use an MZ optical modulator having the optical transmission characteristic as shown in FIG. 2 as the optical modulator 2. When the MZ optical modulator is applied as the optical modulator 2, as described below, the magnitude of the drive voltage generated based on the B Hz electric clock is adjusted to Vπ, thereby enabling time division separation of the B b/s signal light. Here, the EA modulator and the MZ optical modulator 1 have been described as specific examples of the optical modulator 2, but in the present invention, an optical gate (optical modulator) for time division separating the B b/s signal light is not limited to the above example.

The light receiver 3 is a typical optical receiving device receiving the B b/s signal light having passed through the optical modulator 2 to convert it into an electric signal. Here, the electric signal generated by the light receiver 3 is output to the BPF 4. The BPF 4 extracts a component of the repetition frequency B Hz included in the electric signal from the light receiver 3, and outputs the component to the respective drive circuits 5 and 6 as the electric clock.

The drive circuit 5 includes, for example, a phase shifter 5a, an electric amplifier 5b, a DC power source 5c, and a bias-T (bias-tee) 5d. The phase shifter 5a variably shifts a phase of the B Hz electric clock sent from the BPF 4 corresponding to passing timing of the signal light time division separated by the MZ optical modulator 1, to output the phase-adjusted B Hz electric clock. The electric amplifier 5b amplifies the B Hz electric clock phase-adjusted by the phase shifter 5a, to adjust it so that the voltage magnitude of the B Hz electric clock becomes a value equivalent to 2 × Vπ. The DC power source 5c generates a bias voltage for setting an operating point of the MZ optical modulator 1. The bias-T 5d applies a drive signal obtained by supplying the bias voltage from the DC power source 5c to the B Hz electric signal of which voltage magnitude has been adjusted to 2 × Vπ by the electric amplifier 5b, to one end of the electrode 1 c along one of the branched waveguides of the MZ optical modulator 1. Note, the other end of the electrode 1 c to which the 2 × Vπ drive signal is applied at the one end thereof, is impedance-matched and terminated.

The drive circuit 6 includes a phase shifter 6a, an electric amplifier 6b, a DC power source 6c, and a bias-T 6d, as in the configuration of the drive circuit 5. The phase shifter 6a variably shifts the phase of the B Hz electric clock sent from the BPF 4 corresponding to the passing timing of the signal light time division separated by the optical modulator 2 to output the phase-adjusted B Hz electric clock. The electric amplifier 6b amplifies the B Hz electric clock phase-adjusted by the phase shifter 6a to output the amplified B Hz electric clock. Specifically, when the EA modulator having the optical transmission characteristic as shown in FIG. 3 is used as the optical modulator 2, the electric amplifier 6b amplifies the electric clock so that the voltage magnitude of the electric clock from the phase shifter 6a is adjusted to be about 3 to 4V. When the MZ optical modulator having the optical transmission characteristic as shown in FIG. 2 is used as the optical modulator 2, the electric amplifier 6b amplifies the electric clock so that the voltage magnitude of the electric clock from the phase shifter 6a becomes a value equivalent to Vπ. The DC power source 6c generates a bias voltage for setting an operating point of the optical modulator 2. The bias-T 6d applies to the optical modulator 2 a drive signal obtained by supplying the bias voltage from the DC power source 6c to the B Hz electric signal of which voltage magnitude has been adjusted by the electric amplifier 5b.

Next is a description of an operation of the separating apparatus having the above configuration.

At first, an optical gate property of the MZ optical modulator 1 will be described in detail. As shown in FIG. 2, the transmittance of the MZ optical modulator 1 is changed periodically with respect to the applied drive voltage. In many cases, the MZ optical modulator having such a periodic optical transmission characteristic is used usually as an optical intensity modulator, in optical transmitters or the like. In this case, for example as shown in FIG. 4, the voltage magnitude of the drive signal (modulation signal) applied to the MZ optical modulator is adjusted so as to correspond to a voltage difference (typically, this voltage difference is set to Vπ in many cases) between a point where the transmittance becomes a maximum and a point where the transmittance becomes a minimum in the periodic optical transmission characteristic. Assuming that a repetition frequency of the drive signal of which voltage magnitude has been adjusted to Vπ, is B Hz, then signal light that has been intensity-modulated at a bit rate of B b/s is output from the MZ optical modulator.

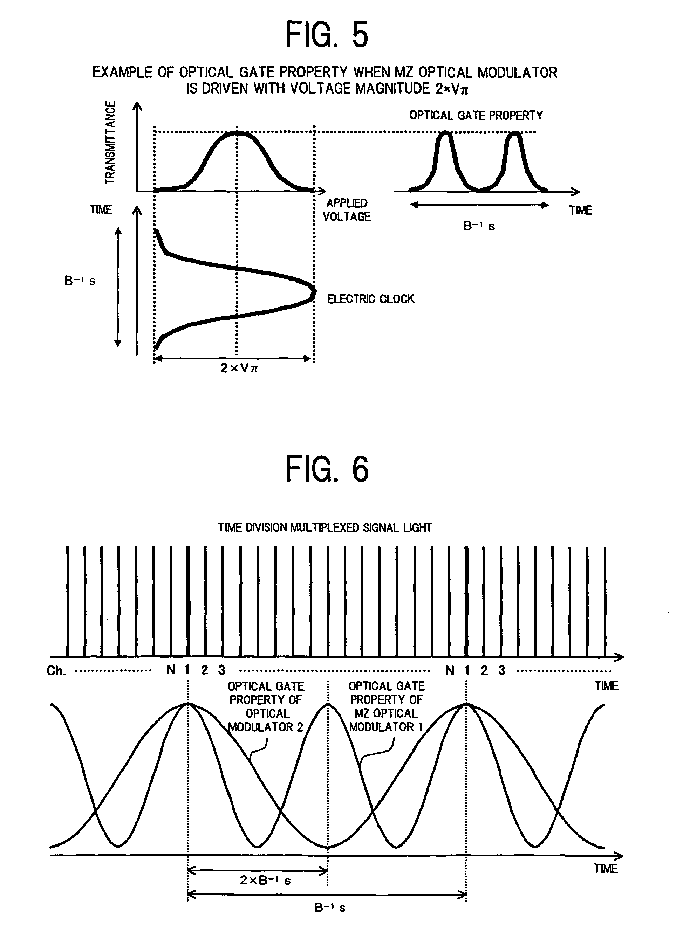

As described above, separately from the typical method for driving the MZ optical modulator with the voltage magnitude of Vπ as described above, the MZ optical modulator 1 in the separating apparatus in this embodiment is driven, for example as shown in FIG. 5, by a drive signal having the voltage magnitude of 2 × Vπ corresponding to a voltage difference in one period in the periodic optical transmission characteristic, that is, a drive signal having the voltage magnitude adjusted corresponding to a voltage difference between adjacent two points where the transmittance becomes a minimum (or a maximum). Specifically, the B Hz electric clock fed back to the drive circuit 5 from the light receiver 3 via the BPF 4 is amplified by the electric amplifier 5b, to thereby adjust the voltage magnitude to 2 × Vπ. Moreover, the electric clock having the magnitude adjusted to 2 × Vπ is supplied with the bias voltage from the DC power source 5c via the bias-T 5d, to thereby also adjust the operation point so that the transmittance in the MZ optical modulator 1 is changed periodically between a minimum value and a maximum value. As a result, the MZ optical modulator 1 can operate as an optical gate of 2 × B Hz, as shown in the right upper part in FIG. 5, without the necessity of multiplication of the B Hz electric clock by 2.

In the separating apparatus in which the MZ optical modulator 1 driven with the voltage magnitude of 2 × Vπ is used as an optical gate of 2 × B Hz, as described above, when the time division multiplexed signal light of N × B b/s as shown in the upper part of FIG. 6 is input, the time division multiplexed signal light is supplied sequentially to the MZ optical modulator 1 operating as the optical gate of 2 × B Hz, and to the optical modulator 2 operating as the optical gate of B Hz, and the signal light having passed through each optical gate is sent to the light receiver 3. The signal light that has reached the light receiver 3 is photoelectrically converted to an electric signal, and the B Hz component included in this electric signal is extracted by the BPF 4 to be fed back as the electric clock to the respective drive circuits 5 and 6, and used for the drive control of the MZ optical modulator 1 and the optical modulator 2.

Here, the control operation will be described for the case where, as shown in FIG. 6, among the B b/s signal light (channels) included in the N × B b/s time division multiplexed signal light, for example, #1 channel is time division separated. In order to time division separate the signal light in #1 channel from the time division multiplexed signal light, it is necessary to control the optical gate property of 2 × B Hz by the MZ optical modulator 1 and the optical gate property of B Hz by the optical modulator 2, each in synchronous with passing timing of #1 signal light. Therefore, in the separating apparatus, the phase of the electric clock fed back to the respective drive circuits 5 and 6 from the light receiver 3 via the BPF 4 is adjusted by the respective phase shifters 5a and 6a. As a result, the respective transmittances of the MZ optical modulator 1 and the optical modulator 2 are controlled to become a maximum, substantially coinciding with the timing when the #1 signal light respectively passes through the MZ optical modulator 1 and the optical modulator 2.

In the MZ optical modulator 1, since the transmittance thereof becomes a maximum at the repetition frequency of 2 × B Hz, as shown in the lower part of FIG. 6, the signal light in other channels is time division separated by the MZ optical modulator 1 even at intermediate timing of the timing when the #1 signal light passes through periodically. Moreover, when an optical gating time in the MZ optical modulator 1 is longer than a channel interval of the time division multiplexed signal light to be separated, components of the signal light adjacent to the #1 signal light also leak. The signal light having passed through the MZ optical modulator 1 is supplied to the optical modulator 2 operating as the optical gate of B Hz synchronous with the passing timing of the #1 signal light, where such unnecessary optical components other than the #1 signal light are removed, as shown in the lower part of FIG. 6, and only the #1 signal light is time division separated to be output from the optical modulator 2.

As described above, according to the separating apparatus of this embodiment, since it is not necessary to provide a frequency doubler as in the conventional configuration shown in FIG. 15, the simplification of configuration can be achieved. Furthermore, since the electric amplifier for B Hz can be used instead of the electric amplifier for 2 × B Hz, a separating apparatus corresponding to the ultrahigh-speed signal light can be easily realized, thereby enabling reduction in apparatus cost.

In the above embodiment, the configuration has been such that the MZ optical modulator 1 driven by the voltage magnitude of 2 × Vπ to operate as the optical gate of 2 × B Hz is arranged on the previous stage of the optical modulator 2 operating as the optical gate of B Hz. However, the present invention is not limited thereto, and a similar effect can be obtained by arranging the MZ optical modulator 1 on the subsequent stage of the optical modulator 2.

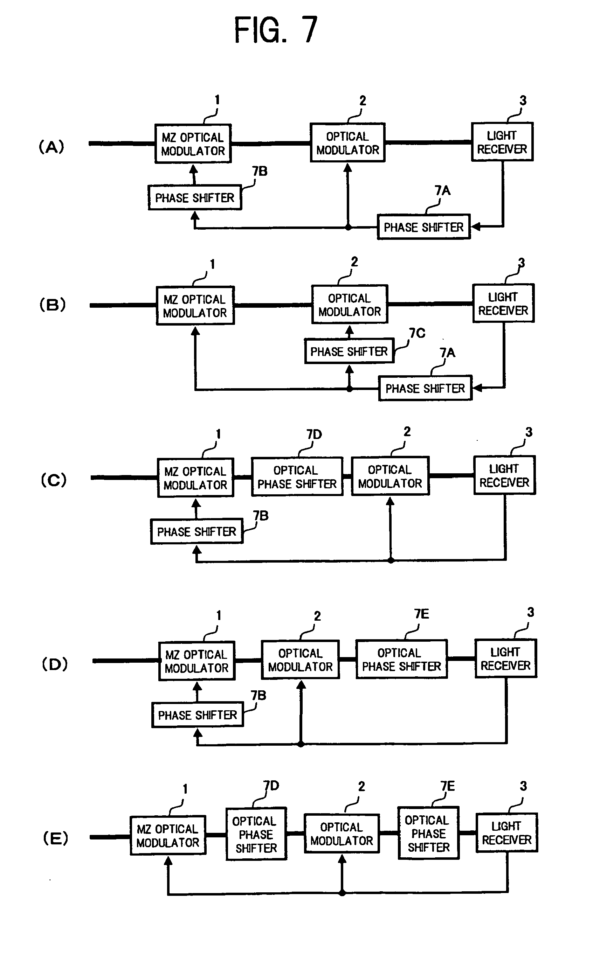

Furthermore, the configuration example has been shown in which the phase of the B Hz electric clock fed back to the respective drive circuits 5 and 6 from the light receiver 3 via the BPF 4 is adjusted by the respective phase shifters 5a and 6a provided in the respective drive circuit 5 and 6. However, the configuration for adjusting the phase of each drive signal with respect to the MZ optical modulator 1 and the optical modulator 2 is not limited to this example, and for example, an arrangement of phase shifters as shown in a schematic diagram shown in (A) to (E) of FIG. 7 is also possible. In FIG. 7, illustration of the respective drive circuits 5 and 6 and the BPF 4 is omitted, for easy understanding of the arrangement of the phase shifters.

Specifically, in a configuration example in (A) of FIG. 7, after the phases of the electric clocks to the MZ optical modulator 1 and the optical modulator 2 are collectively adjusted by a phase shifter 7A, only the phase of the electric clock to the MZ optical modulator 1 is adjusted by a phase shifter 7B. Moreover, in a configuration example in (B) of FIG. 7, in the same manner as described above, for the electric clocks collectively adjusted by the phase shifter 7A, only the phase of the electric clock to the optical modulator 2 is adjusted by a phase shifter 7C. In a configuration example in (C) of FIG. 7, the phase of the electric clock to the MZ optical modulator 1 is adjusted by the phase shifter 7B, and the phase adjustment on the optical modulator 2 side is performed by an optical phase shifter 7D (optical delay circuit) arranged between the MZ optical modulator 1 and the optical modulator 2. This optical phase shifter 7D may be arranged between the optical modulator 2 and the light receiver 3, in a similar manner as for an optical phase shifter 7E in (D) of FIG. 7. Moreover, as shown in a configuration example in (E) of FIG. 7, it is also possible to optically perform the phase adjustment of the MZ optical modulator 1 and the optical modulator 2, by combining the above optical phase shifters 7D and 7E.

Furthermore, in the above embodiment, the explanation has been given for the case where the electric clock fed back to the respective drive circuit 5 and 6 has a signal waveform of sine wave. However, in the present invention, the signal waveform for driving the MZ optical modulator 1 and the optical modulator 2 is not limited to the sine wave. For example, a rectangular wave having steep rise and fall may be generated by applying required signal processing to the B Hz electric clock extracted by the BPF 4, so that the MZ optical modulator 1 and the optical modulator 2 are driven based on the electric clock shaped to rectangular wave. In this case, the respective optical gate properties in the MZ optical modulator 1 and the optical modulator 2 are changed steeply.

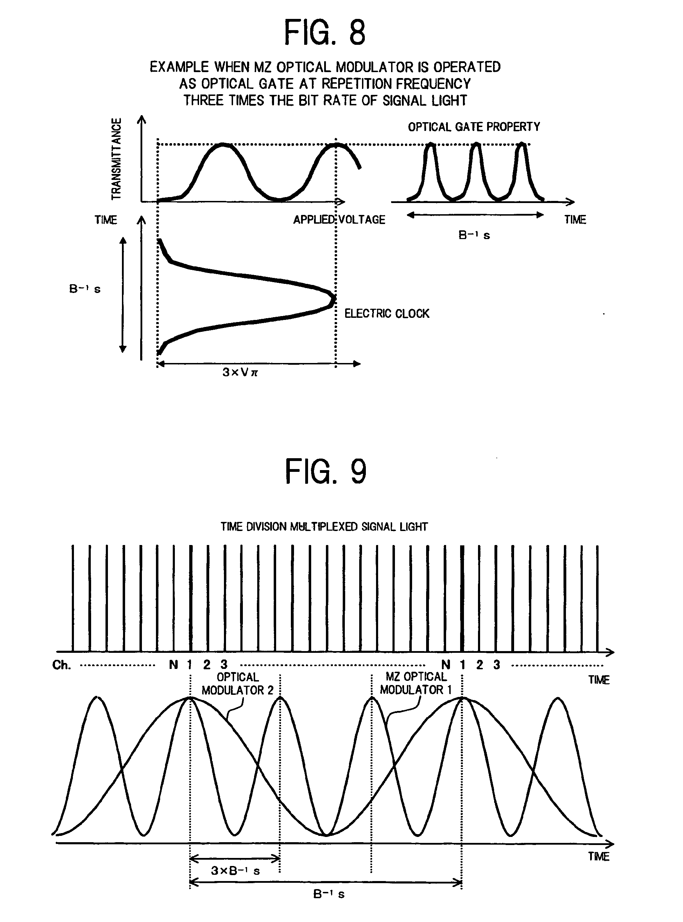

In addition, in the above embodiment, the transmittance of the MZ optical modulator 1 as a first optical section has been set to be changed periodically in accordance with the repetition frequency of twice the bit rate B of the signal light. However, the present invention is not limited thereto, and the transmittance of the MZ optical modulator 1 may be changed in accordance with a repetition frequency larger than twice the bit rate of the signal light. For example, when the transmittance of the MZ optical modulator 1 is changed in accordance with a repetition frequency of three times the bit rate of the signal light, as shown in FIG. 8, a drive signal having the voltage magnitude of 3 × Vπ corresponding to the voltage difference in 1.5 period in the periodic optical transmission characteristic of the MZ optical modulator 1 may be applied to the MZ optical modulator 1. In this case, the MZ optical modulator 1 operating as the optical gate of 3 × B Hz and the optical modulator 2 operating as the optical gate of B Hz operate mutually at timing as shown in FIG. 9. As a result, the B b/s signal light is separated from the N × B b/s time division multiplexed signal light. As described above, according to the present invention, the first optical gate section may be configured such that a drive signal having the voltage magnitude corresponding to a voltage difference in n/2 period in the periodic optical transmission characteristic of a first optical modulator is supplied to the first optical modulator, so that the transmittance is changed in accordance with a repetition frequency larger than twice the bit rate B of the signal light, that is, if generalized, "n" times the bit rate B of the signal light, assuming that n is a positive integer excluding 1.

Next is a description of an optical receiving apparatus using the separating apparatus according to the present invention as described above.

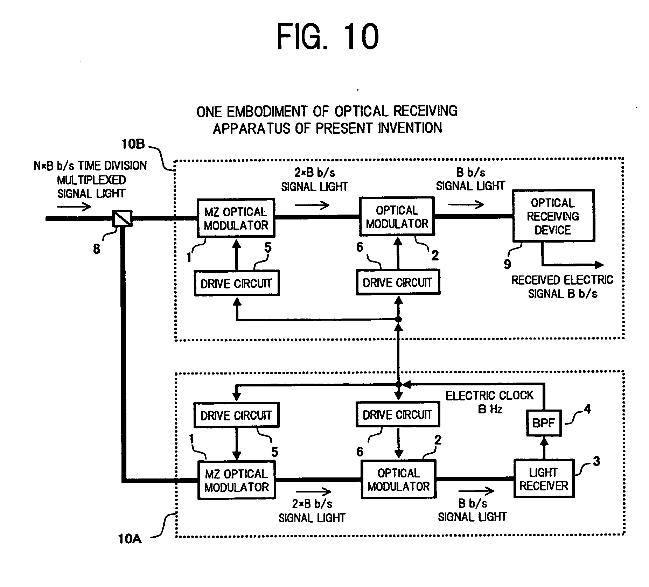

FIG. 10 is a block diagram showing a schematic configuration of one embodiment of an optical receiving apparatus according to the present invention. Components similar to those in the configuration shown in FIG. 1 are denoted by the same reference numerals, and description thereof is omitted, the same applying hereunder to the other drawings.

In FIG. 10, the optical receiving apparatus comprises, for example: an optical coupler 8, which is input with the N × B b/s time division multiplexed signal light obtained by time division multiplexing the B b/s signal light at N degree multiplexing, and branches the time division multiplexed signal light into two to output the branched signal lights; a clock extracting unit 10A extracting a B Hz electric clock based on one of the branched lights output from the optical coupler 8; and a signal light receiving unit 10B time division separating desired B b/s signal light from the other branched light output from the optical coupler 8 to generate a received electric signal, and the respective units 10A and 10B for extracting the clock and for receiving signal light, each have a basically similar configuration to that of the separating apparatus shown in FIG. 1.

However, in the signal light receiving unit 10B, an optical receiving device 9 is provided instead of the light receiver 3 and the BPF 4 in the configuration of FIG. 1, and the phase and voltage magnitude of the B Hz electric clock extracted by the clock extracting unit 10A are adjusted to drive the MZ optical modulator 1 and the optical modulator 2. The optical receiving device 9 is for receiving desired B b/s signal light that has sequentially passed through the MZ optical modulator 1 operating as the optical gate of 2 × B Hz and the optical modulator 2 operating as the optical gate of B Hz, to be time division separated, and for converting the time division separated signal light into an electric signal, to thereby generate a B b/s received electric signal. The electric signal output from this optical receiving device 9 is sent to an equalization amplifying circuit or a discrimination decision circuit, not shown in the figure, to be subjected to known reception processing.

In the optical receiving apparatus having the above configuration, as in the case of the separating apparatus shown in FIG. 1, the MZ optical modulator 1 and the optical modulator 2 in the clock extracting unit 10A respectively operate as the optical gate of 2 × B Hz and the optical gate of B Hz, and the B b/s signal light having passed through the respective optical gates to be time division separated is received by the light receiver 3. The B Hz component included in the B b/s signal light passes through the BPF 4 and is fed back to the respective drive circuits 5 and 6, so that the B Hz electric clock is stably extracted.

In the signal light receiving unit 10B, the B Hz electric clock having passed through the BPF 4 on the clock extraction side is sent to the respective drive circuits 5 and 6, so that the phase and voltage magnitude of the electric clock are respectively adjusted. As a result, also on the signal light reception side, the MZ optical modulator 1 is driven by the voltage magnitude of 2 × Vπ to operate as the optical gate of 2 × B Hz, and the optical modulator 2 operates as the optical gate of B Hz, so that the desired B b/s signal light is time division separated and received by the optical receiving device 9.

In the above optical receiving apparatus, it is assumed that the time division multiplexed signal light of which polarization state is changed is input. Therefore, it is useful to make it possible to time division separate desired signal light from the time division multiplexed signal light in an arbitrary polarization state. For this purpose, it is preferable to use a polarization independent MZ optical modulator 1 formed of, for example, indium phosphorus (lnP) as described above. Moreover, for example, it is also possible to insert an active polarization controller on the previous stage of the MZ optical modulator 1 having typical polarization dependency, to control the polarization state of the time division multiplexed signal light input to the MZ optical modulator 1 to become constant. Specifically, for example, a λ/4 wave plate, a λ/2 wave plate, and an analyzer are sequentially arranged on the previous stage of the MZ optical modulator 1, to pass the time division multiplexed signal light therethrough. The power of the signal light output from the analyzer is observed, and the observation result is fed back to the λ/4 wave plate and the λ/2 wave plate, to thereby control the polarization state of the time division multiplexed signal light sent to the MZ optical modulator 1, to be constant. As such an active polarization controller, for example, a polarization compensator manufactured by Suruga Seiki Co. (VPAC-100) or the like can be utilized.

According to the optical receiving apparatus in this embodiment as described above, B b/s signal light can be time division separated from the N × B b/s time division multiplexed signal light to perform reception processing, using a simpler apparatus configuration, compared to the conventional case shown in FIG. 15. As a result, an optical receiving apparatus corresponding to ultrahigh-speed time division multiplexed signal light can be easily provided at a low cost.

Note, in order to time division separate any of #1 to #N signal lights using the optical receiving apparatus shown in FIG. 10, phase adjustment of the B Hz electric clock may be performed for each time zone corresponding to the number of each signal light.

Next is a description of another embodiment of the optical receiving apparatus according to the present invention.

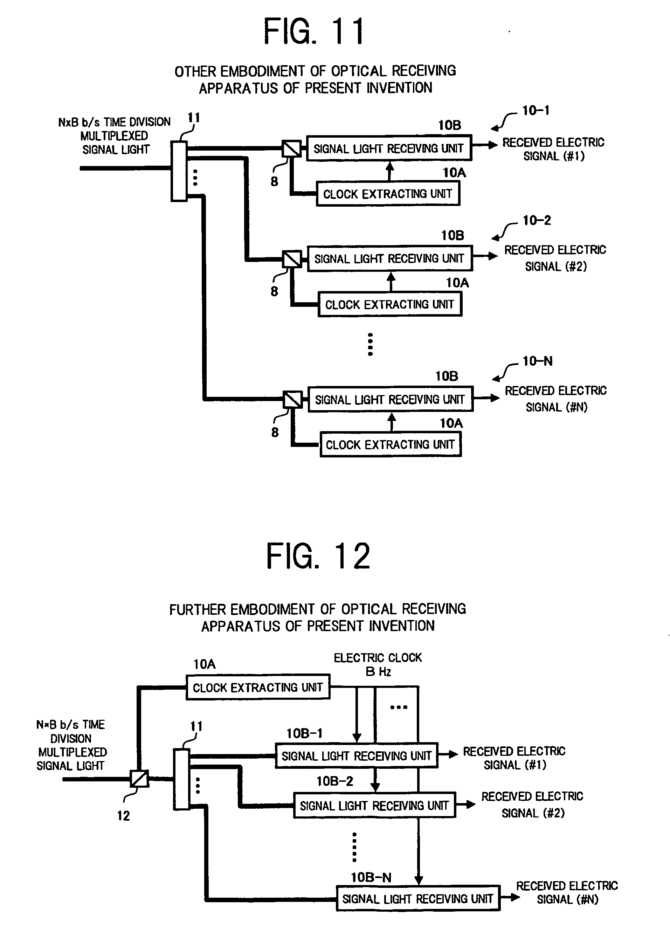

FIG. 11 is a block diagram showing a schematic configuration of another embodiment of the optical receiving apparatus according to the present invention.

In FIG. 11, with this optical receiving apparatus, the configuration of the optical receiving apparatus shown in FIG. 10 is modularized to provide N optical receiving modules 10-1, 10-2, ... 10-N, respectively corresponding to each of #1 to #N signal lights included in the N × B b/s time division multiplexed signal light. The N × B b/s time division multiplexed signal light is branched into N by an optical branching device 11, to be input to the optical coupler 8 in each of the optical receiving modules 10-1 to 10-N.

In the optical receiving apparatus having such a configuration, extraction of the B Hz electric clock and time division separation of the B b/s signal light corresponding to the respective optical receiving modules are preformed, in the respective optical receiving modules 10-1 to 10-N. As a result, in the optical receiving module 10-1, #1 signal light included in the N × B b/s time division multiplexed signal light is received, and in the optical receiving module 10-2, #2 signal light is received. And so on, in the optical receiving module 10-N, #N signal light is received.

As described above, according to the optical receiving apparatus according to this embodiment, the time division separation of each of #1 to #N signal lights included in the N × B b/s time division multiplexed signal light can be performed in parallel.

Next is a description of a further embodiment of the optical receiving apparatus according to the present invention.

FIG. 12 is a block diagram showing a schematic configuration of a further embodiment of the optical receiving apparatus according to the present invention.

In FIG. 12, this optical receiving apparatus is an application example of the optical receiving apparatus shown in FIG. 11, in which the apparatus configuration is simplified by sharing the clock extracting unit that has been provided in each of the optical receiving modules 10-1 to 10-N. Specifically, the N × B b/s time division multiplexed signal light is branched into 2 by an optical coupler 12, and one of the branched lights is sent to a single shared clock extracting unit 10A. The other branched light is sent to the optical branching device 11 described above, to be further branched into N, and then sent to each of N signal light receiving units 10B-1 to 10B-N. The B Hz electric clock extracted by the clock extracting unit 10A is supplied to each of the signal light receiving units 10B-1 to 10B-N, and the phase and voltage magnitude of the electric clock are respectively adjusted in each of the units.

According to the optical receiving apparatus as described above, in the same manner as in the embodiment shown in FIG. 11, it becomes possible to perform parallel processing of time division separation of #1 to #N signal lights included in the N × B b/s time division multiplexed signal light. Moreover, by sharing the clock extracting unit, it becomes possible to further simplify the apparatus configuration, and to perform stably the processing of time division separation of the respective signal lights.

Next is a description of a time division multiplexing optical transmission system using the optical receiving apparatus according to the present invention as described above.

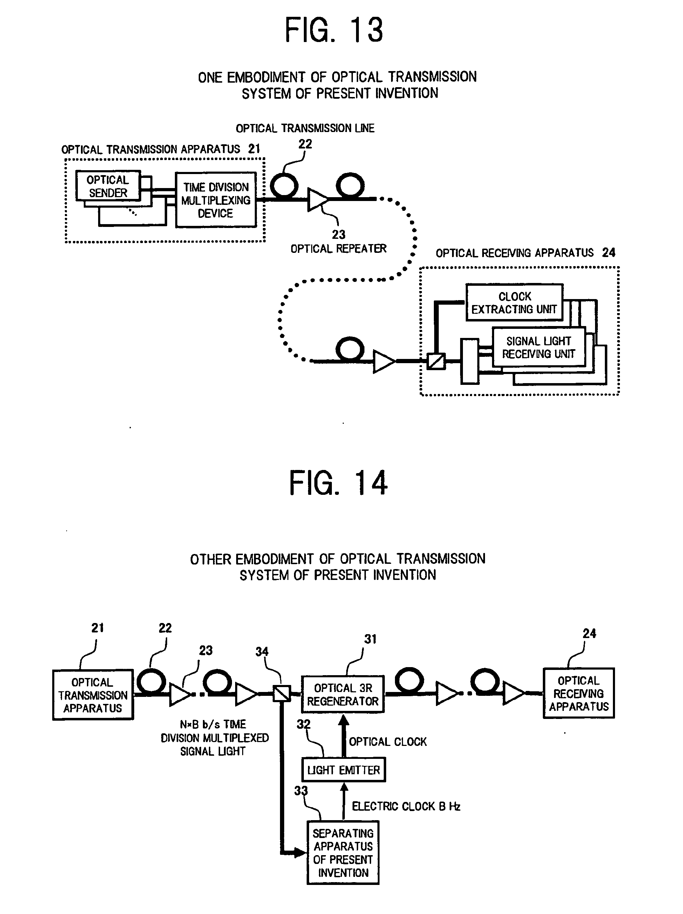

FIG. 13 is a block diagram showing a schematic configuration of one embodiment of an optical transmission system according to the present invention.

In FIG. 13, this optical transmission system is configured such that, in a system comprising an optical transmission apparatus 21 that generates N × B b/s time division multiplexed signal light obtained by time division multiplexing B b/s signal light at N multiplexing degrees, to transmit the signal to an optical transmission line 22, and an optical receiving apparatus 24 that receives the N × B b/s time division multiplexed signal light repeatedly transmitted via a plurality of optical repeaters 23 arranged on the optical transmission line 22, the optical receiving apparatus according to the present invention is applied as the optical receiving apparatus 24. Here, there is shown an example where the configuration of sharing the clock extracting unit shown in FIG. 12 is applied to the optical receiving apparatus 24. However, in the optical transmission system of the present invention, the configuration shown in FIG. 10 or FIG. 11 can be also applied to the optical receiving apparatus 24.

According to the optical transmission system configured as described above by using the optical receiving apparatus 24 to which the optical receiving apparatus of the present invention is applied, an ultrahigh-speed system that time division multiplexes to transmit multiple signal lights can be easily realized.

In the configuration example of FIG. 13, there is shown an example where the plurality of optical repeaters 23 is arranged on the optical transmission line 22 and the time division multiplexed signal light is repeatedly transmitted. However, the optical transmission system of the present invention is not limited to this example, and for example, the time division multiplexed signal light may be transmitted to the optical receiving apparatus 24 from the optical transmission apparatus 21, without passing through the optical repeaters.

Next is a description of another embodiment of the optical transmission system of the present invention. Here, an application example in which the separating apparatus according to the present invention such as shown in FIG. 1 is utilized as means for generating an optical clock to be used in an optical 3R regenerator will be described.

FIG. 14 is a block diagram showing a schematic configuration of the optical transmission system according to this application example.

In FIG. 14, the optical transmission system is configured such that, in a system configuration in which for example, N × B b/s time division multiplexed signal light obtained by time division multiplexing B b/s signal light at N multiplexing degrees is transmitted from the optical transmission apparatus 21 to the optical transmission line 22, and repeatedly transmitted to the optical receiving apparatus 24 via the plurality of optical repeaters 23 arranged on the optical transmission line 22, an optical 3R regenerator 31 is arranged at a required position on the optical transmission line 22, and a separating apparatus 33 having a similar configuration to that shown in FIG. 1 is applied as means for obtaining an electric clock to be supplied to a light emitter 32 that generates an optical clock to be used in the optical 3R regenerator 31. The N × B b/s time division multiplexed signal light branched by an optical coupler 34 inserted on the optical transmission line 22 on the previous stage of the optical 3R regenerator 31 is input to this separating apparatus 33.

In the separating apparatus 33, in the same manner as the embodiment of the separating apparatus described above, the MZ optical modulator 1 operates as the optical gate of 2 × B Hz; and the optical modulator 2 operates as the optical gate of B Hz, and the N × B b/s time division multiplexed signal light branched by the optical coupler 34 passes through the respective optical gates, so that the B b/s signal light is time division separated. The B b/s signal light is fed back to the respective drive circuits 5 and 6 via the light receiver 3 and the BPF 4, so that the B Hz electric clock can be extracted stably. The B Hz electric clock extracted by the separating apparatus 33 is input to the light emitter 32, to generate a B Hz optical clock, and this optical clock is supplied to the optical 3R regenerator 31. In the optical 3R regenerator 31, the N × B b/s time division multiplexed signal light having passed through the optical coupler 34 is subjected to a so-called 3R processing, that is, reshaping, retiming and regenerating, while keeping the optical state, in accordance with the B Hz optical clock from the light emitter 32, and then output to the optical transmission line on the subsequent stage.

As described above, since the electric clock extracted by the separating apparatus 33 is utilized for generating the optical clock used in the optical 3R regenerator 31, it is possible to easily generate the optical clock at the same transmission speed as that of the B b/s signal light included in the N × B b/s time division multiplexed signal light, and also synchronous with the signal light. As a result, it becomes possible to easily realize a system that repeatedly transmits ultrahigh-speed time division multiplexed signal light between the optical transmission apparatus and the optical receiving apparatus, while performing optical 3R regeneration.

## Claims

1. A separating apparatus (33) for time division multiplexed signal light, which is input with time division multiplexed signal light obtained by multiplexing a plurality of signal light on a time axis, including:
a first optical gate section (1, 5) in which the transmittance thereof is periodically changed in accordance with a repetition frequency of n times a bit rate of said signal light, wherein n is a positive integer excluding 1, and
a second optical gate section (2, 6) connected in series to said first optical gate section (1, 5), in which the transmittance thereof is periodically changed in accordance with a repetition frequency equal to the bit rate of said signal light, for separating at least one signal light included in said time division multiplexed signal light on the time axis,
wherein said first optical gate section (1, 5) comprises; a first optical modulator (1) in which an optical transmission characteristic thereof with respect to a drive voltage is periodically changed, and a first drive circuit (5) for supplying to said first optical modulator (1) a drive signal having a repetition frequency equal to the bit rate of said signal light,
and having the voltage magnitude corresponding to n/2 times the voltage difference of the driving voltages at two adjacent maxima or minima of the periodic optical transmission characteristic of said first optical modulator; and
wherein the second optical gate section (2, 6) comprises: a second optical modulator (2) in which an optical transmission characteristic thereof with respect to a drive voltage is periodically changed, and a second drive circuit (6) for supplying to second optical modulator (2) a drive signal having a repetition frequency equal to the bit rate of said signal light, and having the voltage magnitude corresponding to one half of the voltage difference of the driving voltages at two adjacent maxima or minima of the periodic optical transmission characteristic of said second optical modulator.

2. A separating apparatus (33) according to claim 1 wherein said first optical modulator is a Mach-Zehnder optical modulator (1).

3. A separating apparatus (33) according to claim 2,
wherein said Mach-Zehnder optical modulator (1) is constructed using a substrate made of lithium niobate.

4. A separating apparatus (33) according to claim 3, further comprising;
a polarization control section for controlling a polarization state of the time division multiplexed signal light input to said Mach-Zehnder optical modulator (1), to be constant.

5. A separating apparatus (33) according to claim 2,
wherein said Mach-Zehnder optical modulator (1) is constructed using a material for enabling a polarization independent operation.

6. A separating apparatus (33) according to claim 5,
wherein said Mach-Zehnder optical modulator (1) is constructed using a substrate made of indium phosphorus.

7. A separating apparatus (33) according to claim 1,
wherein said first drive circuit (5) is adapted to generate a drive signal to be supplied to said first optical modulator (1), by adjusting a phase and voltage magnitude of an electric clock having a repetition frequency equal to the bit rate of said signal light extracted based on the signal light having passed through said first and second optical gate sections (1, 5, 2, 6).

8. A separating apparatus (33) according to claim 1,
wherein said second optical gate section (2, 6) comprises a second optical modulator (2) in which an optical transmission characteristic thereof with respect to a drive voltage is periodically changed, and a second drive circuit (6) for supplying to said second optical modulator (2) a drive signal having a repetition frequency equal to the bit rate of said signal light.

9. A separating apparatus (33) according to claim 8,
wherein said second optical modulator (2) is an electro-absorption type optical modulator.

10. A separating apparatus (33) according to claim 8,
wherein said second optical modulator (1) is a Mach-Zehnder optical modulator (1), and
said second drive circuit (6) is adapted to supply to said second optical modulator (2) a drive signal having the voltage magnitude corresponding to a voltage difference of a 1/2 period in the periodic optical transmission characteristic of said second optical modulator (2).

11. A separating apparatus (33) according to claim 8,
wherein said second drive circuit (6) is adapted to generate a drive signal to be supplied to said second optical modulator (2), by adjusting a phase and voltage magnitude of an electric clock having a repetition frequency equal to the bit rate of said signal light extracted based on the signal light having passed through said first and second optical gate sections (1, 5, 2, 6).

12. An optical receiving apparatus, which is input with time division multiplexed signal light obtained by multiplexing a plurality of signal light on a time axis, and comprises: a clock extracting unit (10A) extracting a clock having a repetition frequency equal to a bit rate of said signal light, based on said time division multiplexed signal light; and a signal light receiving unit (10B) separating said respective signal light included in said time division multiplexed signal light on the time axis to perform reception processing, wherein at least one of said clock extracting unit (10A) and said signal light receiving unit (10B) includes the separating apparatus (33) for time division multiplexed signal light recited in claim 1.

13. An optical receiving apparatus according to claim 12,
wherein said clock extracting unit (10A) and said signal light receiving unit (10B) are respectively provided for each of said plurality of signal lights included in said time division multiplexed signal light.

14. An optical receiving apparatus according to claim 13,
wherein said clock extracting unit (10A) is shared with two or more signal lights included in said time division multiplexed signal light.

15. An optical transmission system,
wherein time division multiplexed signal light obtained by multiplexing a plurality of signal lights on a time axis is transmitted from an optical transmission apparatus (21) to an optical transmission line (22), and said time division multiplexed signal light transmitted via said optical transmission line (22) is received by the optical receiving apparatus recited in claim 12.

16. An optical transmission system which transmits time division multiplexed signal light obtained by multiplexing a plurality of signal lights on a time axis from an optical transmission apparatus to an optical transmission line (22), and repeatedly transmits said time division multiplexed signal light to an optical receiving apparatus (24) via a plurality of optical repeaters (23) arranged on said optical transmission line,
wherein said optical transmission system comprises an optical regenerator (31) executing optical regeneration processing of said time division multiplexed signal light being propagated through said optical transmission line (22), using an optical clock synchronous with the signal light included in said time division multiplexed signal light, and said optical clock supplied to said optical regenerator (23) is generated based on the clock extracted from the time division multiplexed signal light by the separating apparatus recited in claim 1.

## Patentansprüche

1. Abtrennvorrichtung (33) für Zeitmultiplex-Signallicht, welches mit Zeitmultiplex-Signallicht eingegeben wird, welches durch Multiplexen einer Vielzahl von Signallichtern auf einer Zeitachse erhalten wird, beinhaltend:
ein erster optischer Torabschnitt (1, 5), in welchem die optische Durchlässigkeit davon periodisch in Übereinstimmung mit einer Wiederholfrequenz von n mal eine Bitrate des Signallichts geändert wird, wobei n eine positive Ganzzahl ohne 1 ist, und
ein zweiter optischer Torabschnitt (2, 6), der in Serie zu dem ersten optischen Torabschnitt (1, 5) verbunden ist, in welchem die Durchlässigkeit davon periodisch in Übereinstimmung mit einer Wiederholfrequenz gleich der Bitrate des Signallichts geändert wird, zum Separieren mindestens eines Signallichts, das in dem Zeitmultiplex-Signallicht beinhaltet ist, auf der Zeitachse,
wobei der erste optische Torabschnitt (1, 5) umfasst: einen ersten optischen Modulator (1), in welchem eine optische Übertragungs-Charakteristik davon mit Bezug auf eine Antriebsspannung periodisch geändert wird, und eine erste Antriebsschaltung (5) zum Bereitstellen eines Antriebssignals zu dem ersten optischen Modulator (1) mit einer Wiederholfrequenz gleich der Bitrate des Signallichts, und mit einer Spannungsmagnitude entsprechend n/2 mal der Spannungsdifferenz der Antriebsspannungen bei zwei angrenzenden Maxima oder Minima der periodischen optischen Übertragungseigenschaft des ersten optischen Modulators; und
wobei der zweite optische Torabschnitt (2, 6) umfasst: einen zweiten optischen Modulator (2), in welchem eine optische Übertragungs-Charakteristik davon mit Bezug auf eine Antriebsspannung periodisch geändert wird, und eine zweite Antriebsschaltung (6) zum Bereitstellen eines Antriebssignals zu dem zweiten optischen Modulator (2) mit einer Wiederholfrequenz gleich der Bitrate des Signallichts, und mit der Spannungsmagnitude entsprechend ein Halb der Spannungsdifferenz der Antriebsspannungen an zwei angrenzenden Maxima oder Minima der periodischen optischen Übertragungseigenschaft des zweite optischen Modulators.

2. Abtrennvorrichtung (33) nach Anspruch 1,
wobei der erste optische Modulator ein Mach-Zehnder optischer Modulator (1) ist.

3. Abtrennvorrichtung (33) nach Anspruch 2,
wobei der Mach-Zehnder optische Modulator (1) unter Verwendung eines Substrats aus Lithium-Niobat hergestellt ist.

4. Abtrennvorrichtung (33) nach Anspruch 3, ferner umfassend:
einen Polarisations-Steuerabschnitt zum Steuern eines Polarisationszustands des Zeitmultiplexsignals, das in den Mach-Zehnder optischen Modulator (1) eingegeben wird, um konstant zu sein.

5. Abtrennvorrichtung (33) nach Anspruch 2, wobei der Mach-Zehnder optische Modulator (1) unter Verwendung eines Materials zum Ermöglichen einer Polarisationsunabhängigen Operation hergestellt ist.

6. Abtrennvorrichtung (33) nach Anspruch 5, wobei
der Mach-Zehnder optische Modulator (1) unter Verwendung eines Substrats aus Indiumphosphor hergestellt ist.

7. Abtrennvorrichtung (33), nach Anspruch 1, wobei
die erste Antriebsschaltung (5) eingerichtet ist, um ein Antriebssignal zum Bereitstellen zu dem ersten optischen Modulator (1) zu erzeugen, durch Anpassen einer Phase und Spannungsmagnitude eines elektrischen Takts mit einer Wiederholfrequenz gleich der Bitrate des Signallichts, das basierend auf dem Signallicht extrahiert wurde, das den ersten und zweiten optischen Torabschnitt (1, 5, 2, 6) durchlaufen hat.

8. Abtrennvorrichtung (33) nach Anspruch 1,
wobei der zweite optische Torabschnitt (2, 6) einen zweiten optischen Modulator (2), in welchem eine optische Übertragungs-Charakteristik davon mit Bezug auf eine Antriebsspannung periodisch geändert wird, und eine zweite Antriebsschaltung (6) zum Bereitstellen zu dem zweiten optischen Modulator (2) eines Antriebssignals mit einer Wiederholfrequenz gleich der Bitrate des Signallichts umfasst.

9. Abtrennvorrichtung (33) nach Anspruch 8,
wobei der zweite optische Modulator (2) ein optischer Modulator eines Elektro-Absorptionstyps ist.

10. Abtrennvorrichtung (33) nach Anspruch 8,
wobei der zweite optische Modulator (1) ein Mach-Zehnder optischer Modulator (1) ist, und
die zweite Antriebsschaltung (6) eingerichtet ist, um zu dem zweiten optischen Modulator (2) ein Antriebssignal bereitzustellen mit der Spannungsmagnitude entsprechend einer Spannungsdifferenz von ½ Periode in der periodischen optischen Übertragungseigenschaft des zweiten optischen Modulators (2).

11. Abtrennvorrichtung (33) nach Anspruch 8,
wobei die zweite Antriebsschaltung (6) eingerichtet ist, um ein Antriebssignal zu erzeugen, welches zu dem zweiten optischen Modulator (2) bereitzustellen ist, durch Anpassen einer Phase und Spannungsmagnitude eines elektrischen Takts mit einer Wiederholfrequenz gleich der Bitrate des Signallichts, die basierend auf dem Signallicht extrahiert wurde, welches den ersten und zweiten optischen Torabschnitt (1, 5, 2, 6) durchlaufen hat.

12. Optische Empfangsvorrichtung, welche ein Zeitmultiplexsignal eingegeben wird, das durch Multiplexen einer Vielzahl von Signallichtern auf einer Zeitachse erlangt wird, und umfassend:
eine Takt-Extrahierungseinheit (10A), welche einen Takt mit der Wiederholfrequenz gleich einer Bitrate des Signallichts extrahiert, basierend auf dem Zeitmultiplexsignallicht; und eine Signallicht-Empfangseinheit (10B), welche das jeweilige Signallicht, das in dem Zeitmultiplex-Signallicht beinhaltet ist, auf der Zeitachse separiert, um einen Empfangsprozess durchzuführen, wobei mindestens eine der Takt-Extrahierungseinheit (10A) und der Signallicht-Empfangseinheit (10B) die Separierungsvorrichtung (33) für Zeitmultiplex-Signallicht aus Anspruch 1 beinhaltet.

13. Optische Empfangsvorrichtung nach Anspruch 12, wobei die Takt-Extrahierungseinheit (10A) und die Signallicht-Empfangseinheit (10B) jeweils für jede der Vielzahl von Signallichtern, die in dem Zeitmultiplex-Signallicht beinhaltet sind, bereitgestellt ist.

14. Optische Empfangsvorrichtung nach Anspruch 13, wobei die Takt-Extrahierungseinheit (10A) unter zwei oder mehr Signallichtern geteilt ist, die in dem Zeitmultiplex-Signallicht beinhaltet sind.

15. Optisches Übertragungssystem,
wobei das Zeitmultiplex-Signallicht, das durch Multiplexen einer Vielzahl von Signallichtern auf einer Zeitachse erlangt wird, von einer optischen Übertragungsvorrichtung (21) zu einer optischen Übertragungsleitung (22) übertragen wird, und das Zeitmultiplex-Signallicht, das über die optische Übertragungsleitung (22) übertragen wird, durch eine optische Empfangsvorrichtung nach Anspruch 12 empfangen wird.

16. Optisches Übertragungssystem, welches Zeitmultiplex-Signallicht überträgt, das durch Multiplexen einer Vielzahl von Signallichtern auf einer Zeitachse erlangt wird, von einer optischen Übertragungsvorrichtung zu einer optischen Übertragungsleitung (22) überträgt, und wiederholt das Zeitmultiplex-Signallicht zu einer optischen Empfangsvorrichtung (24) über eine Vielzahl von optischen Repeatern (23), die auf der optischen Übertragungsleitung angeordnet sind, überträgt,
wobei das optische Übertragungssystem einen optischen Regenerator (31) beinhaltet, welcher eine optische Regenerationsverarbeitung des Zeitmultiplex-Signallichts, das durch die optische Übertragungsleitung (22) propagiert, ausführt, unter Verwendung eines optischen Takts, welcher synchron ist mit dem Signallicht, das in dem Zeitmultiplex-Signallicht beinhaltet ist, und der optische Takt, der dem optischen Generator (23) bereitgestellt wird, basierend auf dem Takt, der aus dem Zeitmultiplex-Signallicht extrahiert wurde, erzeugt wird, durch die Abtrennvorrichtung nach Anspruch 1.

## Revendications

1. Dispositif de séparation (33) pour un signal lumineux multiplexé par répartition dans le temps, auquel est appliqué un signal lumineux multiplexé par répartition dans le temps obtenu en multiplexant une pluralité de signaux lumineux sur un axe des temps, comprenant :
une première section de porte optique (1, 5) dans laquelle la transmittance de celle-ci est modifiée périodiquement en fonction d'une fréquence de répétition de n fois un débit binaire dudit signal lumineux, où n est un entier positif à l'exclusion de 1, et
une deuxième section de porte optique (2, 6) connectée en série à ladite première section de porte optique (1, 5), dans laquelle la transmittance de celle-ci est modifiée périodiquement en fonction d'une fréquence de répétition égale au débit binaire dudit signal lumineux, pour séparer au moins un signal lumineux inclus dans ledit signal lumineux multiplexé par répartition dans le temps sur l'axe des temps,
dans lequel ladite première section de porte optique (1, 5) comprend : un premier modulateur optique (1) dans lequel une caractéristique de transmission optique de celui-ci par rapport à une tension de commande est modifiée périodiquement, et un premier circuit de commande (5) pour fournir audit premier modulateur optique (1) un signal de commande ayant une fréquence de répétition égale au débit binaire dudit signal lumineux, et ayant l'amplitude de tension correspondant à n/2 fois la différence de tension des tensions de commande à deux maxima ou minima adjacents de la caractéristique de transmission optique périodique dudit premier modulateur optique ; et
dans lequel la deuxième section de porte optique (2, 6) comprend : un deuxième modulateur optique (2) dans lequel une caractéristique de transmission optique de celui-ci par rapport à une tension de commande est modifiée périodiquement, et un deuxième circuit de commande (6) pour fournir au deuxième modulateur optique (2) un signal de commande ayant une fréquence de répétition égale au débit binaire dudit signal lumineux, et ayant l'amplitude de tension correspondant à une moitié de la différence de tension des tensions de commande à deux maxima ou minima adjacents de la caractéristique de transmission optique périodique dudit deuxième modulateur optique.

2. Dispositif de séparation (33) selon la revendication 1,
dans lequel ledit premier modulateur optique est un modulateur optique de Mach-Zehnder (1).

3. Dispositif de séparation (33) selon la revendication 2,
dans lequel ledit modulateur optique de Mach-Zehnder (1) est réalisé en utilisant un substrat constitué de niobate de lithium.

4. Dispositif de séparation (33) selon la revendication 3, comprenant en outre :
une section de commande de polarisation pour commander un état de polarisation du signal lumineux multiplexé par répartition dans le temps appliqué audit modulateur optique de Mach-Zehnder (1) pour qu'il soit constant.

5. Dispositif de séparation (33) selon la revendication 2,
dans lequel ledit modulateur optique de Mach-Zehnder (1) est réalisé en utilisant un matériau pour permettre un fonctionnement indépendant de la polarisation.

6. Dispositif de séparation (33) selon la revendication 5,
dans lequel ledit modulateur optique de Mach-Zehnder (1) est réalisé en utilisant un substrat constitué de phosphure d'indium.

7. Dispositif de séparation (33) selon la revendication 1,
dans lequel ledit premier circuit de commande (5) est conçu pour générer un signal de commande à fournir audit premier modulateur optique (1), en ajustant une phase et une amplitude de tension d'une horloge électrique ayant une fréquence de répétition égale au débit binaire dudit signal lumineux extraite sur la base du signal lumineux ayant traversé lesdites première et deuxième sections de porte optique (1, 5, 2, 6).

8. Dispositif de séparation (33) selon la revendication 1,
dans lequel ladite deuxième section de porte optique (2, 6) comprend un deuxième modulateur optique (2) dans lequel une caractéristique de transmission optique de celui-ci par rapport à une tension de commande est modifiée périodiquement, et un deuxième circuit de commande (6) pour fournir audit deuxième modulateur optique (2) un signal de commande ayant une fréquence de répétition égale au débit binaire dudit signal lumineux.

9. Dispositif de séparation (33) selon la revendication 8,
dans lequel ledit deuxième modulateur optique (2) est un modulateur optique du type à électro-absorption.

10. Dispositif de séparation (33) selon la revendication 8,
dans lequel ledit deuxième modulateur optique (1) est un modulateur optique de Mach-Zehnder (1), et
ledit deuxième circuit de commande (6) est conçu pour fournir audit deuxième modulateur optique (2) un signal de
commande ayant l'amplitude de tension correspondant à une différence de tension d'une demi période dans la caractéristique de transmission optique périodique dudit deuxième modulateur optique (2).

11. Dispositif de séparation (33) selon la revendication 8,
dans lequel ledit deuxième circuit de commande (6) est conçu pour générer un signal de commande à fournir audit deuxième modulateur optique (2), en ajustant une phase et une amplitude de tension d'une horloge électrique ayant une fréquence de répétition égale au débit binaire dudit signal lumineux extraite sur la base du signal lumineux ayant traversé lesdites première et deuxième sections de porte optique (1, 5, 2, 6).

12. Dispositif de réception optique, auquel est appliqué un signal lumineux multiplexé par répartition dans le temps obtenu en multiplexant une pluralité de signaux lumineux sur un axe des temps, et qui comprend : une unité d'extraction d'horloge (10A) extrayant une horloge ayant une fréquence de répétition égale à un débit binaire dudit signal lumineux, sur la base dudit signal lumineux multiplexé par répartition dans le temps ; et une unité de réception de signal lumineux (10B) séparant ledit signal lumineux respectif inclus dans ledit signal lumineux multiplexé par répartition dans le temps sur l'axe des temps pour effectuer un traitement de réception, dans lequel au moins l'une de ladite unité d'extraction d'horloge (10A) et de ladite unité de réception de signal lumineux (10B) comprend le dispositif de séparation (33) pour un signal lumineux multiplexé par répartition dans le temps selon la revendication 1.

13. Dispositif de réception optique selon la revendication 12, dans lequel ladite unité d'extraction d'horloge (10A) et ladite unité de réception de signal lumineux (10B) sont respectivement prévues pour chacun de ladite pluralité de signaux lumineux inclus dans ledit signal lumineux multiplexé par répartition dans le temps.

14. Dispositif de réception optique selon la revendication 13, dans lequel ladite unité d'extraction d'horloge (10A) est partagée par deux signaux lumineux ou plus inclus dans ledit signal lumineux multiplexé par répartition dans le temps.

15. Système de transmission optique,
dans lequel un signal lumineux multiplexé par répartition dans le temps obtenu en multiplexant une pluralité de signaux lumineux sur un axe des temps est transmis d'un dispositif d'émission optique (21) à une ligne de transmission optique (22), et ledit signal lumineux multiplexé par répartition dans le temps transmis par l'intermédiaire de ladite ligne de transmission optique (22) est reçu par le dispositif de réception optique selon la revendication 12.

16. Système de transmission optique qui transmet un signal lumineux multiplexé par répartition dans le temps obtenu en multiplexant une pluralité de signaux lumineux sur un axe des temps d'un dispositif d'émission optique à une ligne de transmission optique (22), et qui transmet de manière répétée ledit signal lumineux multiplexé par répartition dans le temps à un dispositif de réception optique (24) par l'intermédiaire d'une pluralité de répéteurs optiques (23) agencés sur ladite ligne de transmission optique,
dans lequel ledit système de transmission optique comprend un régénérateur optique (31) exécutant un traitement de régénération optique dudit signal lumineux multiplexé par répartition dans le temps qui est propagé par l'intermédiaire de ladite ligne de transmission optique (22) en utilisant une horloge optique synchrone avec le signal lumineux incluse dans ledit signal lumineux multiplexé par répartition dans le temps, et ladite horloge optique fournie audit régénérateur optique (23) est générée sur la base de l'horloge extraite du signal lumineux multiplexé par répartition dans le temps par le dispositif de séparation selon la revendication 1.
